# EUROPEAN PATENT APPLICATION

(11) **EP 4 715 726 A1**
(43) Date of publication of application: **25.03.2026**
(21) Application number: 24818425.1
(22) Date of filing: 07.05.2024
(51) Int. Cl.: G06T 1/20

(54) **PRIMITIVE DISTRIBUTION METHOD AND APPARATUS, DEVICE, STORAGE MEDIUM, AND COMPUTER PROGRAM PRODUCT**

(30) Priority: 05.06.2023 CN 202310658524
(71) Applicant: Moore Threads Technology Co., Ltd., Beijing 100036 (CN)
(72) Inventor: YANG, Lei, Beijing 100036 (CN); LOU, Yu, Beijing 100036 (CN); SUN, Tong, Beijing 100036 (CN); LI, Mingke, Beijing 100036 (CN)
(74) Representative: Lavoix
(86) International application number: PCT/CN2024/091423
(87) International publication number: WO 2024/250891

(57) **Abstract**

Disclosed in embodiments of the present application are a primitive distribution method and apparatus, a device, and a storage medium. The method is applied to a graphics processing unit, and comprises: a geometry processing pipeline outputs at least one piece of primitive group data sent by a primitive distribution part to a corresponding tiler, wherein the primitive group data comprises a plurality of pieces of data to be distributed having a distribution sequence; each tiler distributes, on the basis of the distribution sequence, the plurality of pieces of data to be distributed in each piece of primitive group data, to generate a polygon list of each tile, wherein the polygon list comprises distributed data corresponding to the tile; and for each tile, a rasterization processing pipeline acquires, from the polygon list corresponding to the tile, distributed data corresponding to the tile so as to perform rasterization processing of the tile.

## Description

### CROSS-REFERENCE TO RELATED APPLICATION(S)

The present disclosure is based on and claims the priority to Chinese Patent Application No. 202310658524.9, "PRIMITIVE DISTRIBUTION METHOD AND APPARATUS, DEVICE, STORAGE MEDIUM" filed on June 5, 2023. The entire content of the Chinese Patent Application is incorporated herein by reference.

### TECHNICAL FIELD

The present disclosure relates to, but is not limited to, the technical field of image processing, and particularly relates to a method and an apparatus for primitive distribution, a device, a storage medium, a graphics processing unit and a computer program product.

### BACKGROUND

A Graphics Processing Unit (GPU) is a dedicated graphics reproduction device for processing and displaying computerized graphics. The GPU is constructed in a highly parallel structure that provides more efficient processing than a typical general-purpose Central Processing Unit (CPU) for a series of complex algorithms. For example, the complex algorithm may correspond to a representation of a two-dimensional or three-dimensional computerized graph.

However, in the process of reproduction of graphics by the GPU, a Tile-Based Rendering (TBR) scheme is used due to electrical power and system bandwidth restrictions, in which the picture is split into image tiles (also known as a title or a block), so that each tile can adapt to on-chip cache. For example, if the on-chip cache is capable of storing 512 kB of data, the picture may be divided into tiles such that the pixel data contained in each tile is less than or equal to 512 kB. In this way, the picture is split into tiles that may be rendered into the on-chip cache, and each tile of the scene is individually rendered into the on-chip cache, the rendered tile from the on-chip cache is stored into a frame buffer, and each tile of the picture is rendered and stored, for rendering the picture. Thus, the picture can be rendered tile by tile to render all tiles of the scene. It can be understood that the TBR scheme belongs to a delayed graphics reproduction manner, and is widely applied into mobile devices because of its low power consumption.

In the traditional TBR processing pipeline, the tiler can determine the tiles where all the primitive data are located, and then store the primitive data into a corresponding polygon list in the memory. Because the tiler is a serialized node, the tiler may become the bottleneck of the whole TBR processing pipeline when dealing with a large amount of primitive data, which will affect the overall graphics processing efficiency.

### SUMMARY

In view of this, the embodiments of the present disclosure provide at least a method and an apparatus for primitive distribution, a device, a storage medium, a graphics processing unit and a computer program product.

The technical solution of the embodiment of the present disclosure is implemented as follows.

An aspect of the embodiments of the present disclosure provides a method for primitive distribution, which is applied to a graphics processing unit. The graphics processing unit performs primitive distribution in at least two tilers of a Tile-Based Rendering (TBR) architecture, and each tiler corresponds to one or more geometry pipelines. The method includes the following operations. The geometry pipeline outputs at least one primitive chunk data sent by a primitive distribution portion to the tiler corresponding to the geometry pipeline. The primitive chunk data includes a plurality of to-be-distributed data in a distribution order.

Each of the tilers distributes the plurality of to-be-distributed data in each primitive chunk data based on the distribution order, to generate polygon lists of all tiles. The polygon list includes distributed data corresponding to the tile.

A rasterization pipeline, for each tile, obtains the distributed data corresponding to the tile from each polygon list corresponding to the tile to perform rasterization processing on the tile.

Another aspect of the embodiments of the present disclosure provides an apparatus for primitive distribution which is applied to a graphics processing unit. The graphics processing unit performs a primitive distribution process in at least two tilers of a Tile-Based Rendering (TBR) architecture. The device includes a geometry pipeline, a tiler and a rasterization pipeline.

The geometry pipeline is configured to output at least one primitive chunk data sent by a primitive distribution portion to the tiler corresponding to the geometry pipeline. The primitive data includes a plurality of to-be-distributed data with a distribution order.

The tiler is configured to distribute the plurality of to-be-distributed data in each primitive chunk data based on the distribution order, to generate polygon lists of all tiles. The polygon list includes distributed data corresponding to the tile.

The rasterization pipeline is configured to, for each tile, obtain the distributed data corresponding to the tile from each polygon list corresponding to the tile to perform rasterization processing on the tile.

Another aspect of the embodiments of the present disclosure provides a computer device including a processor and a memory for storing a computer program which is able to run on the processor. The program, when executed by the processor, implements a part or all of the operations in the above-described method.

Another aspect of the embodiments of the present disclosure provides a computer-readable storage medium on which a computer program is stored. The computer program is executed by a processor to implement a part or all of the operations of the above-described method.

Another aspect of the embodiments of the present disclosure provides a graphics processing unit configured to execute a part or all of the operations of the above-described method.

Another aspect of the embodiments of the present disclosure provides a computer program product including a computer program or an instruction that, when executed by a processor, implements the operations of the method for detecting an abnormal battery cell of any one of claims 1 to 15.

In the embodiment of the present disclosure, at least two geometry pipelines and at least two tilers corresponding to the at least two geometry pipelines perform parallel processing on a plurality of original primitive data in an original input order, thereby improving the early-stage processing efficiency of the graphics processing unit. Also, since each tiler corresponds to one or more geometry pipelines, the tiler may independently process the primitive chunk data in the geometry pipelines corresponding to the tiler. Compared with establishing the connection relationship between all geometry pipelines and each tiler, there is no need in the present disclosure to add a complete interconnection network for each tiler, thereby reducing the complexity of physical design while decreasing the area and power cost. Further, a plurality of polygon lists are set for the tiler in the present disclosure, for storing the obtained distributed data corresponding to all the tiles, and the distributed data corresponding to the tile is obtained from the polygon lists corresponding to the tile through a rasterization pipeline. In this way, the plurality of polygon lists obtained by parallel processing of the plurality of tilers may be merged, and the original input order of all distributed data corresponding to the tile may be restored.

It should be understood that the above general description and the following detailed description are exemplary and explanatory only, and do not limit the present disclosure.

### BRIEF DESCRIPTION OF THE DRAWINGS

The accompanying drawings herein are incorporated into the specification and constitute a part of the specification, and the accompanying drawings illustrate embodiments consistent with the present disclosure, and together with the specification, are used to explain technical solutions of the present disclosure.
FIG. 1A is a schematic diagram of a typical TBR pipeline process according to an embodiment of the present disclosure.
FIG. 1B is a schematic diagram of a primitive distribution process according to an embodiment of the present disclosure.
FIG. 1C is a schematic diagram of a data flow of primitive data in a TBR architecture according to an embodiment of the present disclosure.
FIG. 1D is a schematic flowchart of an implementation of a method for primitive distribution according to an embodiment of the present disclosure.
FIG. 2 is a schematic flowchart of an implementation of a method for primitive distribution according to an embodiment of the present disclosure.
FIG. 3A is a schematic diagram of distributing two primitive chunks by a tiler according to an embodiment of the present disclosure.
FIG. 3B is a schematic flowchart of an implementation of a method for primitive distribution according to an embodiment of the present disclosure.
FIG. 3C is a schematic diagram of distributing two primitive chunks including state change packets by a tiler according to an embodiment of the present disclosure.
FIG. 4A is a schematic diagram of accessing a polygon list of a current tile by a rasterization pipeline according to an embodiment of the present disclosure.
FIG. 4B is a schematic flowchart of an implementation of a method for primitive distribution according to an embodiment of the present disclosure.
FIG. 4C is a first schematic diagram of a polygon list according to an embodiment of the present disclosure.
FIG. 4D is a second schematic diagram of a polygon list according to an embodiment of the present disclosure.
FIG. 4E is a third schematic diagram of a polygon list according to an embodiment of the present disclosure.
FIG. 5 is a schematic structural diagram of a composition of an apparatus for primitive distribution according to an embodiment of the present disclosure.
FIG. 6 is a schematic diagram of a hardware entity of a computer device according to an embodiment of the present disclosure.

### DETAILED DESCRIPTION

In order to make the object, technical solution, and advantages of the present disclosure clearer, the technical solution of the present disclosure is described in further detail below with reference to the accompanying drawings and the embodiments. The described embodiments are not regarded as a limit to the present disclosure. All other embodiments obtained by those skilled in the art without creative work fall within the scope of protection of the present disclosure.

In the following description, the expression "some embodiments" describes a subset of all possible embodiments, but it is understood that the expression "some embodiments" may be the same subset or different subsets of all possible embodiments, and may be combined with each other without conflict. Reference to the terms "first/second/third" are merely to distinguish similar objects and does not represent a specific order of the objects, and it is understood that "first/second/third" may be interchanged in a specific order or a priority order, so that the embodiments of the present disclosure described herein can be implemented in an order other than that illustrated or described herein.

Unless otherwise defined, all technical and scientific terms used herein have the same meaning as commonly understood by those skilled in the art belonging to the present disclosure. The terms used herein are for the purpose of describing the disclosure, rather than limiting the disclosure.

The TBR is a process of subdividing computer graphics images through regular grids in optical space and rendering various grid or tile parts separately. The advantage of this design is to reduce the consumption of memory and bandwidth compared to Immediate Mode Rendering (IMR) which immediately draws the entire frame, which enables the TBR to be commonly used in low-power hardware devices.

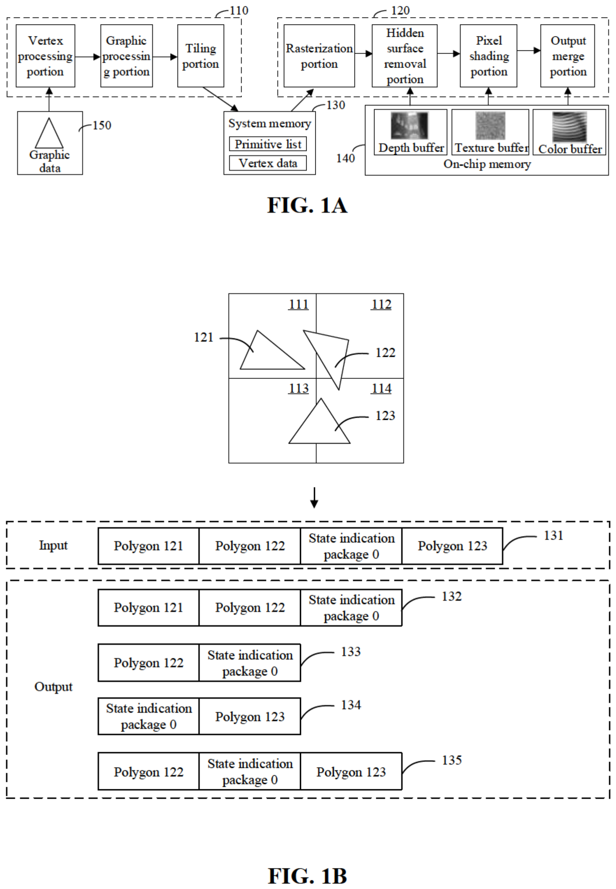

FIG. 1A is a schematic diagram of a typical TBR pipeline process according to an embodiment of the present disclosure. As shown in FIG. 1A, the TBR pipeline process includes a front-end portion 110 and a back-end portion 120.

The front-end portion 110 includes a vertex processing portion, a graphic processing portion and a tiling portion (also known as a tiler). The vertex processing portion is configured to perform vertex and primitive processing on graphic data 150, the graphic processing portion is configured to perform culling, clipping and other operations on primitives, the tiling portion is configured to implement screen segmentation, record graphic data covering tiles, and write generated information such as tile information (primitive list) and vertex information (vertex data) into the system memory 130. The primitive List is an array having the length of tile at a fixed length. Each element in the array is a linked list, which stores pointers of all triangles intersecting the current tile, and the pointer points to vertex date, and the vertex data stores vertex and vertex attribute data.

The back-end portion 120 includes a rasterization portion, a Hidden Surface Removal (HSR) portion, a pixel shading portion and an output merge portion. The rasterization portion is configured to convert the primitives into a two-dimensional image. Each point in the two-dimensional image contains color, depth and texture data, and the point and related information are referred to as a fragment. The HSR portion is configured to eliminate the occluded triangle. The pixel texture shading portion is configured to shade the pixels. The Output merge portion is configured to merge multiple tiles and output them to the Render Target (RT).

Since the amount of data of each tile is not large, the required depth data, texture data and color data of the tile may be loaded into the Static Random-Access Memory (SRAM) (that is, the on-chip memory 140) stored on the chip by the GPU. For example, the HSR portion may store depth data into a depth data buffer in the on-chip memory 140, the pixel shading portion may store texture data into a texture data buffer in the on-chip memory 140, and the Output merge portion may store color data into a color buffer in the on-chip memory 140.

In the rendering process, the rendered object (picture) is divided into a plurality of tiles, and all the data of the tile may be accommodated in the on-chip memory 140. After at least one drawing instruction arrives at the GPU, the front-end portion 110 sequentially processes each drawing instruction, and stores the tile information and vertex information into the system memory 130 until the data stored in the system memory 130 reaches a preset threshold value or the at least one drawing instruction has all been processed. The back-end portion 120 reads the vertex information corresponding to the tile from the system memory 130 in units of tiles, and performs subsequent processing. In this way, since the access of the back-end portion 120 to the system memory 130 is changed to the access of the back-end portion 120 to the on-chip memory 140, the rendering efficiency may be improved.

The front-end portion may also be referred to as a geometry pipeline, and in the actual processing of the graphics processing unit, the geometry pipeline may receive a geometry data stream outputted by the application program, and process primitive data in the geometry data stream, including converting the primitive data to the screen space, eliminating the invisible primitive data in the screen space, and the like. The tiler at the end of the geometry pipeline determines which primitive data overlaps with which tile, and the tiler generates a data structure of a polygon list, for each tile, that stores each primitive data overlapping with the tile.

It should be understood that the tiler processes the input primitive data in the original order and determines the tile which overlaps with each primitive data, and writes the primitive data into the corresponding polygon list. The primitive data must be added to the polygon list in the original order, which is the order of the primitive data in the geometry data stream received by the geometry pipeline.

In some scenarios, state change packets including the configuration of the pipeline portion are sent between multiple primitives. The state change packets should be output to each polygon list, and the order of the state change packets relative to the polygons (such as triangles) is the same as the original order.

Referring to the schematic diagram of the primitive distribution process shown in FIG. 1B. FIG. 1B exemplarily shows four tiles including tile 111, tile 112, tile 113 and tile 114. A geometry data stream received by a current geometry pipeline may be the polygon list 131 as shown in FIG. 1B, and the geometry data stream may include a polygon 121, a polygon 122, a state indication package 0 and a polygon 123 arranged in order.

The polygon 121 overlaps the tile 111, the polygon 122 overlaps the tile 111, the tile 112 and the tile 114, and the polygon 123 overlaps the tile 113 and the tile 114. Based on this, the tiler may obtain polygon list 132 corresponding to the tile 111, polygon list 133 corresponding to the tile 112, polygon list 134 corresponding to the tile 113, and polygon list 135 corresponding to the tile 114. The polygon list 132 includes the polygons 121, the polygons 122, the status indication packet 0 arranged in order. The polygon list 133 includes the polygons 122 and the status indication packet 0 arranged in order. The polygon list 134 includes the status indication packet 0 and the polygon 123 arranged in order. The polygon list 135 includes the polygons 122, the state indication package 0 and the polygons 123 arranged in order. It may be seen that the state indication package 0 exists in the polygon list corresponding to each tile, and the order of the state indication package 0 in each polygon list relative to other polygons is the same as the order of the state indication package 0 in the original polygon list 131 relative to other polygons.

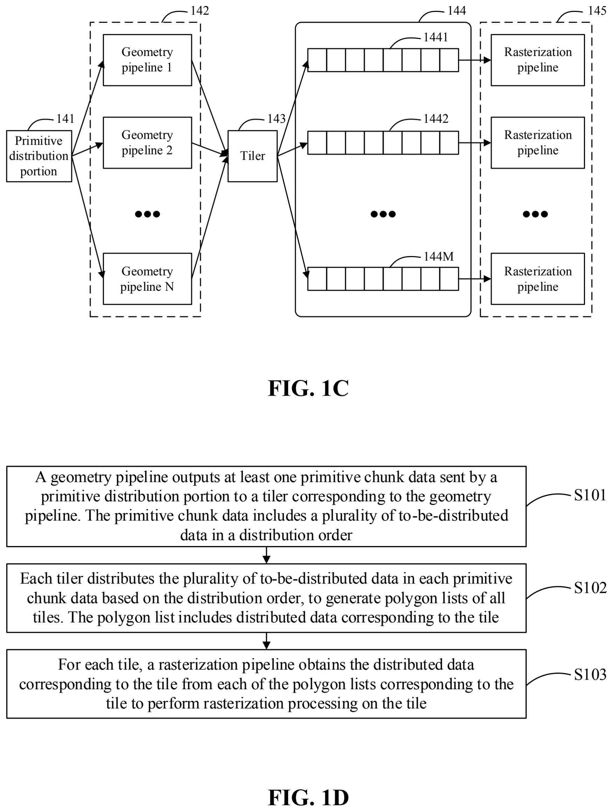

Reference is made to the schematic diagram of a data flow of primitive data in the TBR architecture shown in FIG. 1C. As shown in FIG. 1C, the TBR architecture may include a primitive distribution portion 141, a geometry pipeline 142, a tiler 143, and a rasterization pipeline 145. The tiler 143 may write a polygon list corresponding to each tile to the memory 144. For example, when the number of tiles is M, M polygon lists are in the memory, such as polygon list 1441, polygon list 1442, ... polygon list 144M in FIG. 1B. Each tile corresponding to one polygon list. The tiler 143 is a serialization point that combines primitives from different geometry pipelines (e.g., geometry pipeline 1 to geometry pipeline N in FIG. 1C), restores the primitives to their original order, and writes the primitives to associated polygon lists (e.g., polygon list 1441, polygon list 1442, ..., polygon list 144M in FIG. 1C). For each distributed primitive, the tiler determines which tile the primitive overlaps with and adds the primitive to the polygon list corresponding to the tile. After that, the polygon list of each tile is processed by the rasterization pipeline to generate all pixels of the tile. It should be noted that multiple rasterization pipelines are logical. In a typical implementation, the rasterization pipelines are mapped to one or more physical pipelines in a time-shared manner.

In some embodiments, the N geometry pipelines may be conventional geometry pipelines (e.g., Vertex/Tessellation/Geometry Pipeline, VTG pipeline). In other embodiments, the N geometry pipelines described above may be Mesh Shader Pipelines. It should be understood that there is only one type of geometry pipeline in the same architecture.

In high-performance GPU designs, the above-mentioned serialization node may be a performance limiter of the whole system, because the throughput of the serialization node is limited. Even if multiple serialization tilers are established in the above scheme to independently and concurrently manage the output of the tiles, all primitive data should be collected, classified and reassigned to different tiles at a time point. In the current scheme, the above operations must occur before the tile data is written to memory, which essentially replicates the problem that on-chip interconnection addresses in large-scale integrated circuit designs. However, if another interconnection network is added to implement the interconnection of the tiler and each geometry pipeline, area cost, power cost and the complexity of physical design are significantly increased, since the geometry data transmitted between the geometry processing stage and the tiler often consumes tens or hundreds of megabytes. Therefore, the requirements for the bandwidth and delay are not low.

In order to solve the above problems, the embodiments of the present disclosure provide a method for primitive distribution, which may be performed by a processor of a computer device. The computer device may be a device having data processing capabilities such as a server, a notebook computer, a tablet computer, a desktop computer, a smart TV, a set-top box, a mobile device (for example, a mobile phone, a portable video player, a personal digital assistant, a dedicated messaging device, a portable game device), and the like.

FIG. 1D is a schematic flowchart of an implementation of a method for primitive distribution according to an embodiment of the present disclosure. As shown in FIG. 1D, the method may include the following steps S101 to S103.

At S101, a geometry pipeline outputs at least one primitive chunk data sent by a primitive distribution portion to a tiler corresponding to the geometry pipeline. The primitive chunk data includes a plurality of to-be-distributed data in a distribution order.

In some embodiments, the primitive distribution portion is configured to group a plurality of original primitive data in an original input order to obtain at least one primitive chunk data corresponding to each geometry pipeline. The primitive distribution portion is connected to all the geometry pipeline, and for each geometry pipeline, the primitive distribution portion is further configured to output the at least one primitive chunk data to the geometry pipeline. Accordingly, the tiler processes the at least one primitive chunk data, to implement parallel processing a plurality of original primitive data by at least two tilers.

In some embodiments, each tiler may be connected to one or more geometry pipelines, that is, each tiler may be connected to at least one geometry pipeline. For example, every two geometry pipelines are connected to one tiler.

In some embodiments, the number of geometry pipelines corresponding to each tiler may be the same or different. For example, the first geometry pipeline is connected to one tiler, the second and third geometry pipelines are connected to another tiler, which is not limited in the embodiments of the present disclosure. It should be understood that the primitive chunk data sent by the primitive distribution portion to different tilers for processing does not overlap and does not cause waste of resources.

Those skilled in the art should understand that technical solution in which a tiler is connected to one or more geometry pipelines fall within the scope of the claims of this disclosure.

In some embodiments, each geometry pipeline is connected to only one tiler, that is, the geometry pipeline has a one-to-one correspondence with the tiler, and different geometry pipelines correspond to different tilers.

In the present embodiment, the primitive chunk data may include a plurality of to-be-distributed data, and the plurality of to-be-distributed data have a distribution order. It should be understood that the distribution order of the plurality of to-be-distributed data in the primitive chunk data is the same as the order of the plurality of to-be-distributed data in the plurality of original primitive data.

In some embodiments, the plurality of to-be-distributed data may include the primitive data, and may further include a state change packet, or may include both the primitive data and the state change packet, which is not limited in the embodiments of the present disclosure.

At S102, each tiler distributes the plurality of to-be-distributed data in each primitive chunk data based on the distribution order, to generate a polygon list of each tile. The polygon list includes distributed data corresponding to the tile.

In some embodiments, for any one tiler, the tiler receives at least one primitive chunk data outputted by the geometry pipeline, and distributes the primitive chunk data. In detail, the tiler may distribute a plurality of to-be-distributed data in each primitive chunk data. In the process of distributing a plurality of to-be-distributed data in any one primitive chunk data, tiles corresponding to the to-be-distributed data may be sequentially determined according to the distribution order described above, and a polygon list corresponding to each of the tiles may be generated based on the tiles corresponding to the to-be-distributed data.

In some embodiments, the polygon list corresponding to each tile may be generated in advance. After the tile corresponding to the to-be-distributed data is determined, each to-be-distributed data is written as distributed data into the polygon list generated in advance corresponding to the tile, that is, to obtain the polygon list of the tile. That is, if the screen is divided into M tiles, it is necessary to establish M polygon lists in advance. After the tile corresponding to the to-be-distributed data is determined, the to-be-distributed data is written as distributed data into the polygon list corresponding to the tile among the M polygon lists.

In another embodiment, the polygon list corresponding to the tile may be generated based on the tile corresponding to the current to-be-distributed data after the tile corresponding to the to-be-distributed data is determined. That is, if the screen is divided into M tiles, it is not necessary to establish M polygon lists in advance. After the tiles corresponding to all the to-be-distributed data are determined, a polygon list needs to be established for only part (or all) of the tiles to store the corresponding to-be-distributed data. In this case, the tiles corresponding to all the to-be-distributed data are counted, for each tile to be established, at least one distributed data corresponding to the tile to be established is determined, and the polygon list corresponding to the tile to be established is established, and at least one distributed data corresponding to the tile to be established is written into the polygon list corresponding to the tile to be established, to generate the polygon list of the tile.

For example, in case where one primitive chunk data includes a total of 20 pieces of to-be-distributed data from P1 to P20, the tiler may sequentially determine tiles corresponding to the to-be-distributed data in the order from P1 to P20. For example, the to-be-distributed data corresponding to tile 1 includes P1 to P10 and P15, the to-be-distributed data corresponding to tile 2 includes P11 to P14, the to-be-distributed data corresponding to tile 3 includes P16 to P20. Here, the graphics processing unit divides the screen into tile 1 to tile 4.

In some embodiments, the polygon list corresponding to each tile may be generated in advance, and in the process of sequentially determining the tiles corresponding to the to-be-distributed data in the order from P1 to P20, the tiler writes the to-be-distributed data into the corresponding polygon lists corresponding to the tiles. After P20 is written, the polygon list corresponding to tile 1 is obtained, which includes the distributed data (P1, P2, P3, P4, P5, P6, P7, P8, P9, P10, P15) arranged in order, a polygon list corresponding to tile 2 is obtained, which includes the distributed data (P11, P12, P13, P14) arranged in order, a polygon list corresponding to tile 3 is obtained, which includes the distributed data (P16, P17, P18, P19, P20) arranged in order, and a polygon list corresponding to tile 4 is obtained, which is empty.

In other embodiments, the tiles corresponding to the to-be-distributed data may be determined first, and then based on the determination result, a polygon list corresponding to tile 1 may be generated, which includes the distributed data (P1, P2, P3, P4, P5, P6, P7, P8, P9, P10, P15) arranged in order, a polygon list corresponding to the tile 2 may be generated, which includes the distributed data (P11, P12, P13, P14) arranged in order, and a polygon list corresponding to the tile 3 may be generated, which includes the distributed data (P16, P17, P18, P19, P20) arranged in order. In this case, although the graphics processing unit divides the screen into tile 1 to tile 4, the polygon list corresponding to tiles 4 is not generated.

At S103, for each tile, a rasterization pipeline obtains the distributed data corresponding to the tile from the polygon list corresponding to the tile to perform rasterization processing on the tile.

In the embodiment of the present disclosure, since there are at least two tilers, and at least one primitive chunk data processed by different tilers are different, the distributed data corresponding to one tile may be distributed in the polygon lists of the current tile corresponding to all the tilers. In the process of performing rasterization processing on the current tile, the rasterization pipeline merges all polygon lists corresponding to the current tile, that is, merges distributed data in all polygon lists of the current tile to obtain all distributed data corresponding to the tile.

In some embodiments, the primitive distribution portion groups a plurality of original primitive data in an original input order to obtain at least one primitive chunk data corresponding to each geometry pipeline. In this process, the at least one primitive chunk data corresponding to each geometry pipeline may be sequentially determined according to the order of all the primitive chunk data. Taking N geometry pipelines as an example, at least one primitive chunk data corresponding to the first geometry pipeline is located in front of at least one primitive chunk data corresponding to the second geometry pipeline, at least one primitive chunk data corresponding to the second geometry pipeline is located in front of at least one primitive chunk data corresponding to the third geometry pipeline, and so on. In this way, since the tilers have a one-to-one correspondence with the geometry pipelines, the rasterization pipeline, based on the order of the tilers, sequentially reads the polygon list corresponding to the tile for each tiler, thereby restoring the original input order of each primitive chunk data, in the process of obtaining the distributed data corresponding to the tile from the polygon list corresponding to the tile through the rasterization pipeline. Since a plurality of to-be-distributed data in each primitive chunk data is distributed in the distribution order and written into the polygon list, the rasterization pipeline may restore the order of the plurality of distributed data within the primitive chunk data when the rasterization pipeline reads the plurality of distributed data in the primitive chunk data from the polygon list. Based on the embodiments described above, the rasterization pipeline may restore the original input order of all distributed data corresponding to the tile.

According to the embodiments described above, at least two geometry pipelines and at least two tilers perform parallel processing on a plurality of original primitive data in the original input order, thereby improving the early-stage processing efficiency of the graphics processing unit. Also, since each tiler corresponds to one or more geometry pipelines, the tilers may independently process the primitive chunk data in the corresponding the geometry pipelines. Compared with establishing the connection relationship between all geometry pipelines and each tiler, there is no need in the present disclosure to add a complete interconnection network for each tiler, thereby reducing the complexity of physical design while decreasing the area and power cost. Further, a plurality of polygon lists are set for the tiler in the present disclosure, for storing the obtained distributed data corresponding to all the tiles, and the distributed data corresponding to the tile is obtained from the polygon lists corresponding to the tile through a rasterization pipeline. In this way, the plurality of polygon lists obtained by parallel processing of the plurality of tilers may be merged, and the original input order of all distributed data corresponding to the tile may be restored.

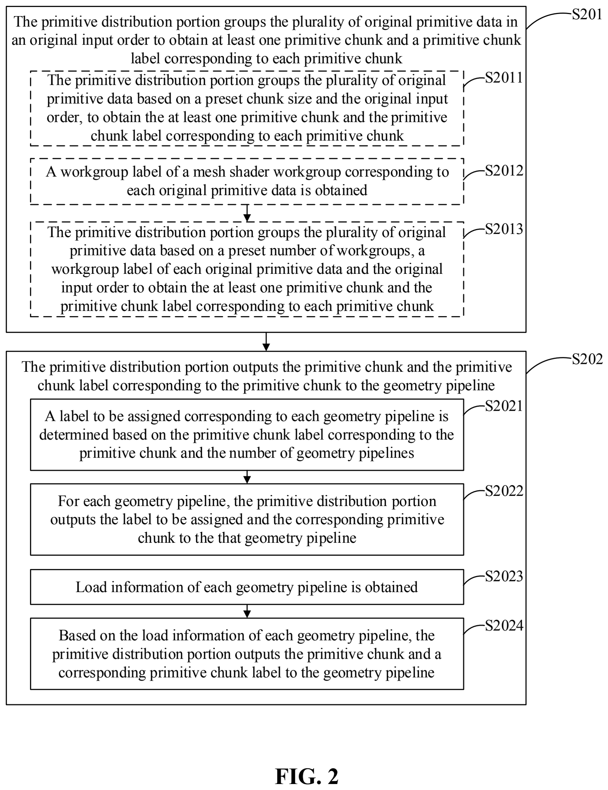

In some embodiments, the primitive chunk data further includes a primitive chunk label for representing an order of the primitive chunk data. FIG. 2 is an optional schematic flowchart of a method for primitive distribution according to an embodiment of the present disclosure. The method may be performed by a processor of a computer device. Based on FIG. 1D, the method further includes a step of grouping a plurality of original primitive data in an original input order, which is explained in connection with the steps shown in FIG. 2.

At S201, the primitive distribution portion groups the plurality of original primitive data in an original input order to obtain at least one primitive chunk and a primitive chunk label corresponding to each primitive chunk.

The primitive chunk includes a plurality of to-be-distributed data in a distribution order, and the primitive chunk label is used to represent a position of the plurality of to-be-distributed data in the original input order.

In the present embodiment, the input of the primitive distribution portion is a plurality of original primitive data in an original input order. The primitive distribution portion is simultaneously connected with at least two geometry pipelines, and the tiler corresponds to one or more geometry pipelines. Based on this, the primitive distribution portion may output at least one primitive chunk data to each geometry pipeline, and the tiler may acquire the at least one primitive chunk and the primitive chunk label from the geometry pipeline corresponding to the tiler.

In some embodiments, the primitive distribution portion is configured to group the plurality of original primitive data in the original input order, to obtain the at least one primitive chunk. Also, the primitive distribution portion may also assign a primitive chunk label to each primitive chunk after grouping, and the primitive chunk label is used to determine the order of the primitive chunk. The primitive chunk may include a plurality of to-be-distributed data, and the primitive chunk also represents the position of the plurality of to-be-distributed data in the original input order.

In some embodiments, in the process of grouping the plurality of original primitive data, if the plurality of original primitive data are grouped into the preset number of primitive chunks, the number (preset number - 1) of grouping point may be determined among the plurality of original primitive data, and the plurality of original primitive data may be grouped based on the (preset number - 1) grouping points to obtain the at least one primitive chunk.

Exemplarily, there are 100 original primitive data in an original input order, which are P1 to P100 in order, and after the 100 original primitive data are grouped, 4 primitive chunks are obtained, the first primitive chunk including P1 to P25, the second primitive chunk including P26 to P50, the third primitive chunk including P51 to P75, and the fourth primitive chunk including P76 to P100. The primitive distribution portion may assign a primitive chunk label L1 to the first primitive chunk, a primitive chunk label L2 to the second primitive chunk, a primitive chunk label L3 to the third primitive chunk, and a primitive chunk label L4 to the fourth primitive chunk, L1 < L2 < L3 < L4.

In some embodiments, in each primitive chunk, the order of the plurality of to-be-distributed data in the primitive chunk is the same as the order of the plurality of to-be-distributed data in the plurality of original primitive data.

For example, there are 100 original primitive data in an original input order, which are P1 to P100 in order. After the 100 original primitive data are grouped, for any one primitive chunk, taking the third primitive chunk as an example, the order of the 25 to-be-distributed data in the third primitive chunk is the same as the order of the 25 to-be-distributed data in P1 to P100.

In some embodiments, the at least one primitive chunk satisfies any one of the following preset grouping conditions: all the primitive chunks have the same number of to-be-distributed data; and the to-be-distributed data in all the primitive chunks corresponds to the same numbers of mesh shader workgroups.

In some embodiments, the geometry pipeline is a conventional geometry pipeline, and the geometry pipeline may include at least one of a Vertex Shader (VS), a Geometry Shader (GS), a Hull Shader (HS), and a Domain Shader (DS). Accordingly, the preset grouping condition may be that the primitive chunks have the same number of to-be-distributed data, and the step of grouping a plurality of original primitive data in an original input order by the primitive distribution portion to obtain at least one primitive chunk and a primitive chunk label may be implemented by S2011.

At S2011, the primitive distribution portion groups the plurality of original primitive data based on a preset chunk size and the original input order, to obtain the at least one primitive chunk and the primitive chunk label corresponding to each primitive chunk.

The preset chunk size represents the number of to-be-distributed data included in the primitive chunk obtained after grouping. In case where the to-be-distributed data includes only primitive data, the obtained primitive chunks have the same number of primitive data. In case where the to-be-distributed data includes the primitive data and the state change packet, the obtained primitive chunks have the same total number of primitive data and state change packets.

Exemplarily, the above-described grouping process is described by taking the 20 as an example of the preset chunk size. In case where 100 original primitive data in an original input order sequentially includes P1 to P100, P1 to P20 may be determined as the first primitive chunk based on the preset block size, and L1 may be assigned as the primitive chunk label corresponding to the first primitive chunk. P21 to P40 are determined as the second primitive chunk based on the preset block size, and L2 is assigned as the primitive chunk label corresponding to the second primitive chunk, and so on until P81 to P100 are determined as the fifth primitive chunk based on the preset block size, and L5 is assigned as the primitive chunk label corresponding to the fifth primitive chunk.

A plurality of original primitive data is grouped to obtain a plurality of primitive chunks with the same size based on the above embodiment. Therefore, when each of the primitive chunks are distributed to the respective geometry pipeline, the geometry pipelines may respectively process the same number of to-be-distributed data as much as possible, thereby realizing load balancing of the geometry pipelines.

In other embodiments, the geometry pipeline is a mesh shader pipeline that includes a mesh shader for generating primitives in a workgroup. The mesh shader pipeline may also include a task shader. Accordingly, the preset grouping condition is that the to-be-distributed data in all the primitive chunks correspond to the same number of mesh shader workgroups. The step of grouping a plurality of original primitive data in an original input order by the primitive distribution portion to obtain at least one primitive chunk and a primitive chunk label may be implemented by steps S2012 to S2013.

At S2012, a workgroup label of a mesh shader workgroup corresponding to each original primitive data is obtained.

In some embodiments, the mesh shader workgroup is configured to generate the original primitive data, various original primitive data may be generated by different mesh shader workgroups, and each original primitive data may carry a corresponding workgroup label, and the workgroup label is used to determine the mesh shader workgroup that generates the original primitive data. For example, in the process of generating each original primitive data by the mesh shader pipeline, each mesh shader workgroup may assign a corresponding workgroup label (which may also be referred to as a workgroup number ID) to the original primitive data generated by the mesh shader workgroup.

For example, the original primitive data includes P1 to P100, P1 to P15 are generated by a first mesh shader workgroup, P16 to P30 are generated by a second mesh shader workgroup, P31 to P45 are generated by a third mesh shader workgroup, P46 to P70 are generated by a fourth mesh shader workgroup, P71 to P90 are generated by a fifth mesh shader workgroup, and P91 to P100 are generated by a sixth mesh shader workgroup.

At S2013, the primitive distribution portion groups the plurality of original primitive data based on a preset number of workgroups, workgroup labels of all the original primitive data and the original input order, to obtain the at least one primitive chunk and the primitive chunk label corresponding to each primitive chunk.

In some embodiments, the primitive distribution portion may acquire all the original primitive data corresponding to the first workgroup label based on the original input order, and determine whether the preset number of workgroups is satisfied. In case that the preset number of workgroups is satisfied, all the acquired original primitive data is taken as a primitive chunk, and a primitive chunk label corresponding to the current primitive chunk is generated. In case that the preset number of workgroups is not satisfied, the original primitive data corresponding to the second workgroup label is obtained, and whether the preset number of workgroups is satisfied is determined, and whether all the acquired original primitive data is taken as one primitive chunk or the original primitive data corresponding to the next workgroup label is continued to be acquired is determined based on the determination result until all the workgroup labels are traversed.

Exemplarily, the description will be made with taking a case of the above P1 to P100 corresponding to six mesh shader workgroups as an example. When the preset number of workgroups is 2, all original primitive data corresponding to the first mesh shader workgroup and the second mesh shader workgroup may be taken as the first primitive chunk, and L1 may be allocated as a primitive chunk label corresponding to the first primitive chunk. All original primitive data corresponding to the third mesh shader workgroup and the fourth mesh shader workgroup may be taken as a second primitive chunk, and L2 may be allocated as a primitive chunk label corresponding to the second primitive chunk. All original primitive data corresponding to the fifth mesh shader workgroup and the sixth mesh shader workgroup may be taken as the third primitive chunk, and L3 may be allocated as a primitive chunk label corresponding to the third primitive chunk.

The plurality of original primitive data are grouped based on the above embodiment, and a plurality of primitive chunks may be obtained in which the to-be-distributed data correspond to the same number of mesh shader workgroups. Therefore, when all of the primitive chunks are distributed to the respective geometry pipelines, the geometry pipelines may process the same numbers of to-be-distributed data as much as possible, thereby realizing load balancing of the geometry pipeline.

At S202, the primitive distribution portion outputs the primitive chunk and the primitive chunk label corresponding to the primitive chunk to the geometry pipeline.

In some embodiments, the primitive distribution portion corresponds to at least two geometry pipelines. Therefore, for any one of the at least two geometry pipelines, in case where the primitive distribution portion outputs W primitive chunks and corresponding primitive chunk labels thereof to the geometry pipeline, and after the geometry pipeline performs geometric processing on to-be-distributed data for each of the W primitive chunks, the geometry pipeline outputs the W primitive chunks and corresponding primitive chunk labels thereof to the tiler, and the tiler performs the subsequent distribution process on the to-be-distributed data. W is a positive integer.

In some embodiments, the primitive distribution portion may directly output all the grouped primitive chunks to the geometry pipelines in turn based on the primitive chunk labels corresponding to all the primitive chunks, until all the primitive chunks are output to the downstream geometry pipelines. For example, in case where there are two geometry pipelines, the primitive distribution portion may sequentially extract the primitive chunks having the top chunk labels based on the chunk labels corresponding to the primitive chunks, and output the primitive chunks to the first geometry pipeline until a processing queue of the first geometry pipeline is full. The primitive distribution portion may determine whether there are remaining primitive chunks, continue sequentially taking the primitive chunks with the top chunk labels in case where there are remaining primitive chunks, and output the primitive chunks to the second geometry pipeline until a processing queue of the second geometry pipeline is full. If there are remaining primitive chunks, the above operations continue until all primitive chunks are output to the downstream geometry pipeline.

It should be understood that before the primitive distribution portion outputs the primitive chunks to the geometry pipeline, the primitive chunk labels corresponding to the primitive chunks may be outputted to the geometry pipeline to determine a boundary between the current primitive chunk and the previous primitive chunk. It can be understood that the primitive chunk is actually a plurality of to-be-distributed data belonging to the same primitive chunk, and the operation of sending the primitive chunk label before sending the primitive chunk may make the plurality of to-be-distributed data corresponding to different primitive chunks have a obvious boundary, and also it is convenient to subsequently restore the order of to-be-distributed data located in different primitive chunks.

It should be understood that in case where the number of primitive chunks is small and the number of geometry pipelines is large, the primitive chunks are not enough to be allocated to all the geometry pipelines, and in this case, the primitive distribution portion may output the primitive chunks and the primitive chunk labels corresponding to the primitive chunks to a part of geometry pipelines.

In some embodiments, the primitive distribution portion may output the primitive chunks and corresponding primitive chunk labels to the geometry pipelines based on a load balancing strategy.

In this embodiment, after grouping the plurality of original primitive data to obtain at least one primitive chunk and a primitive chunk label corresponding to each primitive chunk, the primitive distribution portion may subsequently output the at least one primitive chunk and the corresponding primitive chunk label to at least two parallel geometry pipelines. To reduce the probability of the situation where some geometric pipelines have a high load and some geometric pipelines have a low load, the primitive distribution portion may determine the corresponding primitive chunk for each geometry pipeline by using a load balancing strategy, and output the primitive chunk and the primitive chunk label corresponding to the primitive chunk to the geometry pipeline. Since the geometry pipeline outputs the to-be-distributed data in the primitive chunk to a tiler connected to the geometry pipeline after processing the to-be-distributed data in the primitive chunk, the above-described process of outputting the primitive chunk may also be described as outputting at least one primitive chunk and a corresponding primitive chunk label to the geometry pipeline.

Based on the above-described embodiment, the primitive distribution portion may cause at least two geometry pipelines to be in a load balanced state in a process of outputting at least one primitive chunk to the downstream geometry pipelines. Therefore, when parallel processing all original primitive data (that is, processing all primitive chunks), the geometry pipelines may make full use of the computing resources of the geometry pipelines, and also improves the overall processing efficiency of the geometry pipeline.

In some embodiments, the above-described step that the primitive distribution portion outputs the primitive chunk and the primitive chunk label corresponding to the primitive chunk to the geometry pipeline based on the load balancing strategy may be implemented by steps S2021 to S2022.

At S2021, a label to be assigned corresponding to each geometry pipeline is determined based on the primitive chunk label corresponding to the primitive chunk and the number of geometry pipelines.

At S2022, for each geometry pipeline, the primitive distribution portion outputs the label to be assigned and a primitive chunk corresponding to the label to be assigned to the geometry pipeline.

In some embodiments, when there are M primitive chunks and N geometry pipelines, the primitive chunks may be evenly assigned to the geometry pipelines in the following manner. The number of primitive chunks to be processed by each geometry pipeline is determined first, m = ceil (M/N), that is, the number of primitive chunks to be processed by each geometry pipeline is the value obtained by dividing M by N and rounding toward positive infinity. m primitive chunk labels are randomly selected from the M primitive chunk labels as at least one to-be-assigned label to be processed by the first geometry pipeline, m primitive chunk labels are randomly selected from the remaining primitive chunk labels as at least one to-be-assigned label to be processed by the second processing pipeline, and so on until all the remaining primitive chunk labels are taken as at least one to-be-assigned label of the last geometry pipeline.

Based on the above-described embodiments, the number of primitive chunks obtained by all the geometry pipelines may be as even as possible, and none of the primitive chunks is ignored or processed repeatedly. When the primitive chunks are randomly assigned to the geometry pipelines, the algorithm may have randomness, thereby improving the plasticity of the algorithm. Furthermore, it should be noted that in case where M is not divisible by N, the last geometry pipeline may process different number of primitive chunks from the other geometry pipelines.

In other embodiments, the above-described step that the primitive distribution portion outputs the primitive chunk and the primitive chunk label corresponding to the primitive chunk to the geometry pipeline based on the load balancing strategy may be implemented by steps S2023 to S2024.

At S2023, load information of each geometry pipeline is obtained.

In some embodiments, the load information of the geometry pipeline may include at least one of the number of primitive chunks being processed in the geometry pipeline, the number of primitive chunks waiting for processing, a ratio of the number of primitives being processed to a maximum load number, a ratio of the number of primitive chunks waiting for processing to a maximum waiting number, and the like.

At S2024, based on the load information of each geometry pipeline, the primitive distribution portion outputs the primitive chunk and a corresponding chunk label to the geometry pipeline.

In some embodiments, in case where the load information includes a ratio of the number of primitives being processed to the maximum load number, the load information of each geometry pipeline is obtained which is measured by a ratio of the number of primitives being processed divided by the maximum load number. If a ratio of load of a geometry pipeline is lower than a preset load threshold, such as 0.8, the geometry pipeline is marked as "idle state". If a ratio of load of a geometry pipeline is equal to or higher than the preset load threshold, the geometry pipeline is marked as "busy". According to the number of geometry pipelines current in the idle state, the number of primitive chunks to be processed by each geometry pipeline in the idle state is calculated, m = ceil (M/N), that is, the number of primitive chunks to be processed by each geometry pipeline in the idle state is a value obtained by dividing M by N and rounding toward zero. All unprocessed primitive chunks are randomly assigned to all geometry pipelines in the idle state, and unassigned primitive chunks are randomly assigned to the geometry pipeline in the busy state. In this way, the distribution process of all primitive chunks can be completed. It should be understood that the number of primitive chunks processed by each geometry pipeline in the distribution process described above does not exceed the maximum load number thereof.

In the embodiment of the present disclosure, a set of primitive chunks processed by each geometry pipeline and the primitive chunk labels thereof are sent to the corresponding geometry pipeline for processing. During the outputting processing, the primitive chunk labels are strived to match the corresponding primitive chunks to correctly render and process the primitive chunks. In this way, the primitive chunks may be evenly and efficiently distributed to all the geometry pipelines based on the load information, and the load ratios of the geometry pipelines are as close as possible, and the probability that the processing performance is degraded since the geometry pipeline is overloaded can be reduced. Furthermore, processing efficiency can be improved and the processing of the geometry pipelines is stable, thereby facilitating optimizing the effect of the entire rendering process.

In another embodiment, the ratio of the number of primitive chunks waiting to be processed to the maximum waiting number may be taken as the load information which is further used in the distribution and outputting process of the primitive chunks. Since the distribution and outputting process is similar to the implementation process in which the ratio of the number of primitive chunks being processed to the maximum load number is taken as the load information described above, the distribution and outputting process will not be described in detail in the present disclosure.

In some embodiments, for each tiler, in case where target primitive chunk data is included in at least one primitive chunk data of the tiler, a polygon list of a target tile corresponding to the tiler includes a primitive chunk label of the target primitive chunk data and all the target distribution data belonging to the target tile in the target primitive chunk data.

The target primitive chunk data is primitive chunk data in which at least one target distribution data belongs to the target tile. An order of each target distribution data in the polygon list is the same as the distribution order. The primitive chunk label of the target primitive chunk data precedes the target distribution data.

In some embodiments, for each tiler, the tiler receives at least one primitive chunk data output by all geometry pipelines corresponding to the tiler, i.e., the tiler receives at least one primitive chunk and a primitive chunk label of the at least one primitive chunk corresponding to each of the geometry pipelines, the each primitive chunk includes a plurality of to-be-distributed data (including at least one primitive data).

In the present embodiment, in the process of distributing the target primitive chunk data in at least one primitive chunk data, if there is at least one target distribution data, in a plurality of to-be-distributed data (which may also be understood as a plurality of pieces of primitive data) corresponding to the target primitive chunk data, which belongs to the target tile among the plurality of tiles, a primitive chunk label of the target primitive chunk data and each target distribution data are written into a polygon list corresponding to the target tile. The order of the target distribution data in the polygon list is the same as the distribution order, and the primitive chunk label of the target primitive chunk data is located in front of the target distribution data.

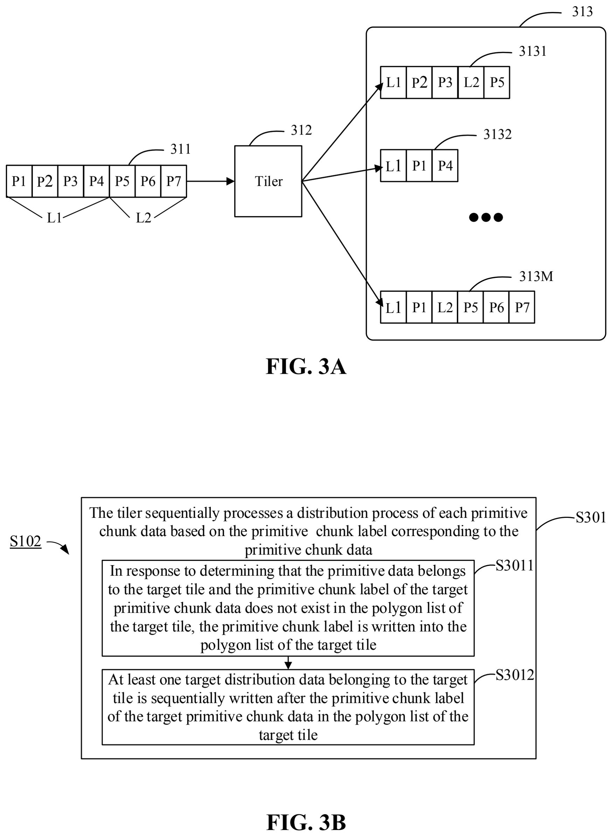

Referring to FIG. 3A, which is a schematic diagram of distributing two primitive chunks by a tiler. For convenience of explanation, one tiler corresponding to one geometry pipeline is taken as an example in the following embodiment, which does not limit the number of geometry pipelines corresponding to the tiler, and the present disclosure may also be applied to a scenario in which one tiler corresponds to a plurality of geometry pipelines. In FIG. 3A, the tiler 312 receives two primitive chunks 311 output by the geometry pipeline, and primitive chunk labels corresponding to the two primitive chunks are L1 and L2. The primitive chunk L1 includes four primitive data P1, P2, P3 and P4 arranged in order, and the primitive chunk L2 includes three primitive data P5, P6 and P7 arranged in order. The tiler 312 may determine the tile to which the primitive data in each primitive chunk belongs, and write the primitive data to the polygon list corresponding to the tile in the system memory 313.

For convenience of understanding, a case that the screen is divided into M tiles by the graphics processing unit is taken as an example. The polygon list in FIG. 3A may include M polygon lists, and one polygon list is used to store data corresponding to one tile. For the polygon list 3131 corresponding to the first tile, since the primitive data P2 and P3 in the primitive chunk L1 and the primitive data P5 in the primitive chunk L2 all have an overlapping relationship with the first tile, P2, P3, and P5 are written into the polygon list 3131. The primitive chunk label L1 of the first tile is written into the polygon list 3131 before the primitive data P2 and P3 is written, and the primitive chunk label L2 of the second tile is written into the polygon list 3131 before the primitive data P5 is written.

It should be noted that, for the polygon list 3132 corresponding to the second tile, since the primitive data P1 and P4 in the primitive chunk L1 have an overlapping relationship with the second tile, P1 and P4 are written into the polygon list 3132. Also, the primitive chunk label L1 of the first tile is written into the polygon list 3131 before the primitive data P1 and P4 are written. Since there is no overlapping relationship between the primitive data of the primitive chunk L2 and the second tile, the primitive chunk label L2 corresponding to the second primitive chunk does not exist in the polygon list 3132 corresponding to the second tile compared to the polygon list 3131. The polygon list 313M corresponding to the M-th tile is similar to the polygon list 3131 corresponding to the first tile, and the description thereof is not repeated here.

It may be seen that the order of P2 and P3 in the polygon list 3131 corresponding to the first tile is the same as the order of P2 and P3 in the primitive chunk L1, and the primitive chunk label L1 corresponding to the first primitive chunk is located in front of P2 and P3. The order of P5 to P7 in the polygon list 313M corresponding to the M-th tile is the same as the order of P5 to P7 in the primitive chunk L2, and the primitive chunk label L2 corresponding to the second primitive chunk is located in front of P5 to P7.

Based on the above embodiment, the respective polygon lists of all the tiles are set for any one tiler, it is convenient for the rasterization pipeline to uniformly extract the primitive data of every tile, that is, in the process of rendering the current tile, the rasterization pipeline may directly merge the polygon lists corresponding to the current tile in all the tilers, and obtain all the primitive data corresponding to the current tile. Also, the primitive chunk label of the primitive chunk corresponding to the target distribution data in the polygon list provided by the present disclosure is located in front of the target distribution data. Therefore, in the process of merging all the polygon lists corresponding to the current tile by the rasterization pipeline, the order of all target distribution data may be explicit to the rasterization pipeline, and the original input order may be effectively restored.

FIG. 3B is an optional schematic flowchart of a method for primitive distribution according to an embodiment of the present disclosure. The method for primitive distribution may be performed by a processor of a computer device. Based on FIG. 1D, the plurality of to-be-distributed data in FIG. 1D includes at least one primitive data. The step that the tiler distributes the plurality of to-be-distributed data in each primitive chunk data based on the distribution order to generate the polygon list for each tile will be described in conjunction with the step shown in FIG. 3B.

At S301, the tiler sequentially performs a distribution process of all the primitive chunk data based on the primitive chunk label corresponding to the primitive chunk data.

For the distribution process of the target primitive chunk data, the tiler sequentially determines a tile corresponding to each of the primitive data in the target primitive chunk data based on the distribution order. Each of the primitive data in the target primitive chunk data is written into a polygon list of the tile corresponding to the primitive data.

In some embodiments, any one tiler has obtained at least one primitive chunk data and a corresponding primitive chunk label output from the geometry pipeline. At S301, since the primitive chunk label may represent the order between the primitive chunk data, the tiler sequentially performs the distribution process of all the primitive chunk data based on the primitive chunk label corresponding to the primitive chunk data.

Since at least one primitive data is included in the plurality of to-be-distributed data in the primitive chunk data, a distribution process in which the tiler sequentially processes all primitive chunk data includes: for the current target primitive chunk data, determining an order corresponding to the at least one primitive data based on a distribution order of a plurality of to-be-distributed data corresponding to the target primitive chunk data, and sequentially determining, by the tiler, a tile corresponding to each primitive data based on the order, and writing, by the tiler, the primitive data into a polygon list corresponding to the tile.

In some embodiments, polygon lists corresponding to all the tiles are initialized in advance in the system memory, and in a process in which the tile corresponding to each of the primitive data in the primitive chunk is sequentially determined based on the order, the primitive data of the tile may be written into the initialized polygon list corresponding to the tile in the system memory. The order of the primitive data in the polygon list is the same as the order of the primitive data in the distribution order.

Based on the above embodiment, since the tile corresponding to each of the primitive data in the target primitive chunk data is sequentially determined by the tiler based on the distribution order, and each of the primitive data in the target primitive chunk data is written into a polygon list of a corresponding tile, an order between at least two distributed data in the same primitive chunk in the polygon list is the same as the previous distribution order.

In some embodiments, the primitive chunk label needs to be written into the polygon list when writing the primitive data. In order to facilitate understanding of the present solution, one primitive data is taken as an example in the following embodiment to explain the writing process of the primitive data and the primitive chunk label. The above-described step of writing each primitive data in the target primitive chunk data into the polygon list of the tile may be implemented in steps S3011 to S3012.

At S3011, in response to determining that the primitive data belongs to the target tile and a primitive chunk label of the target primitive chunk data does not exist in a polygon list of the target tile, the primitive chunk label of the target primitive chunk data is written into the polygon list of the target tile.

In some embodiments, in case where the tiler determines that the current primitive data belongs to a target tile among a plurality of tiles, whether the primitive chunk label of the target primitive chunk data already exists in the polygon list corresponding to the target tile is further determined. Here, the purpose of determining whether the primitive chunk label of the target primitive chunk data exists in the polygon list is to determine whether the primitive chunk label of the target primitive chunk data corresponding to the current primitive data has been written, that is, to determine whether the target primitive chunk data corresponding to the current primitive data is in the writing process of to-be-distributed data.

When a primitive chunk label of the target primitive chunk data already exists in the polygon list corresponding to the target tile, it indicates that there is target distribution data in the target primitive chunk data which has already been written into the polygon list corresponding to the target tile, and in this case, the primitive data may be written continuously to the polygon list corresponding to the target tile.

When there is no primitive chunk label of the target primitive chunk data in the polygon list corresponding to the target tile, it indicates that no primitive data of the target primitive chunk is written into the polygon list corresponding to the target tile, and there may be a primitive chunk label and primitive data of other primitive chunk data in the polygon list corresponding to the target tile. If the current primitive data is directly written into the polygon list corresponding to the target tile, the current primitive data may be mistakenly regarded as belonging to other primitive chunk data, and the order of the current primitive data cannot be normally restored, which affects the subsequent rendering process. Therefore, it is necessary to write the primitive chunk label of the target primitive chunk data into the polygon list of the target tile to form a boundary relative to other primitive data.

At S3012, at least one target distribution data belonging to the target tile is sequentially written after the primitive chunk label of the target primitive chunk data in the polygon list of the target tile.

In some embodiments, since the primitive chunk label of the target primitive chunk data has been written in the polygon list of the target tile, if there is primitive data belonging to the target tile in the subsequent distribution process of the target primitive chunk data, the primitive data is directly written into the polygon list of the target tile without repeatedly writing the primitive chunk label of the target primitive chunk data.

It will be appreciated that during distribution of a new primitive chunk data through the tiler, a new primitive chunk label corresponding to the new primitive chunk data does not exist in any of the polygon lists. That is, in the embodiment of the present disclosure, after the primitive chunk label of the target primitive chunk data is written into the polygon list of the target tile, all target distribution data belonging to the target tile is sequentially written into the polygon list of the target tile. Different primitive chunk data correspond to different primitive chunk labels, and the primitive chunk label is a unique identifier (of to-be-distributed data in the primitive chunk data) of the primitive chunk data.

In the embodiment of the present disclosure, the primitive chunk label of the primitive chunk corresponding to the target distribution data in the polygon list provided by the present disclosure is located in front of the target distribution data, and only one primitive chunk label is set for the target distribution data belonging to the same primitive chunk, thereby reducing the list length of the polygon list. Also, the primitive chunk label of the primitive chunk corresponding to the target distribution data is set, the order of all the target distribution data may be explicit to the rasterization pipeline in the process of merging the polygon lists corresponding to the current tile in all the tilers by the rasterization pipeline, and the original input order may be effectively restored.

In some embodiments, the method further includes, in case where primitive chunk data including a state change packet is present in at least one primitive chunk data of the tiler, for each tile, the state change packet is written to a polygon list of each tile corresponding to the tile. An order of the state change packet in the polygon list of each tile is the same as a distribution order of the state change packet in the primitive chunk data.

The plurality of to-be-distributed data may include, in addition to the plurality of primitive data, a state change packet for controlling a pipeline state of the subsequent rasterization pipeline.

In some embodiments, for each tiler, the tiler receives at least one primitive chunk data (i.e., at least one primitive chunk and a corresponding primitive chunk label) output by the geometry pipeline. Each primitive chunk includes a plurality of to-be-distributed data (including at least one primitive data, possibly including a state change packet).

In the present embodiment, if there is a state change packet in a plurality of to-be-distributed data in the current primitive chunk data distributed by the tiler, a state change instruction packet in the target primitive chunk data needs to be written into polygon lists corresponding to all tiles corresponding to the tiler.

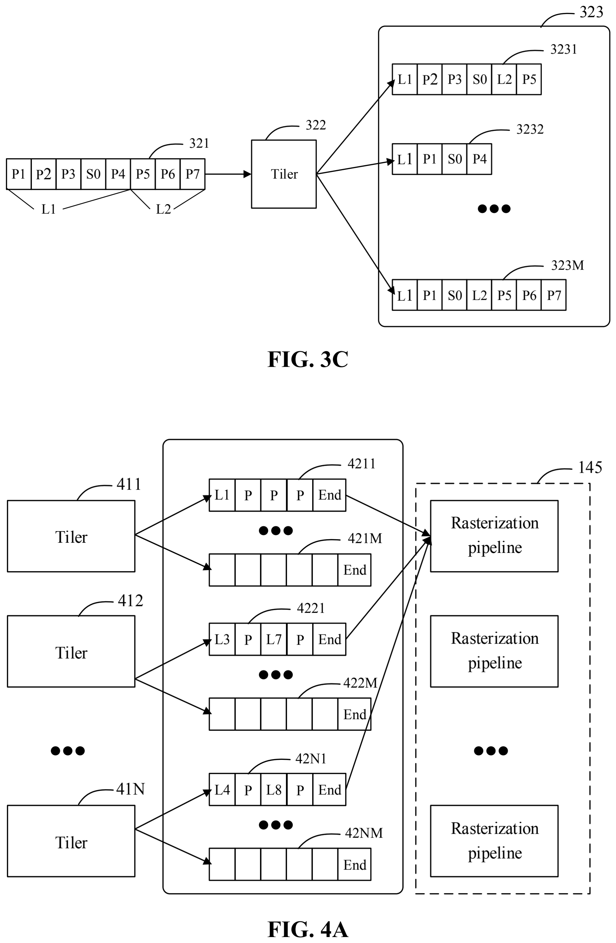

Referring to FIG. 3C, which is a schematic diagram of distributing two primitive chunks including the state change packet by a tiler, the tiler 322 receives two primitive chunks 321 output by the corresponding geometry pipeline, the corresponding primitive chunk labels of the two primitive chunks are L1 and L2. The primitive chunk L1 includes four primitive data and one state change packet P1, P2, P3, S0 and P4 arranged in order, and the primitive chunk L2 includes three primitive data P5, P6 and P7 arranged in order. The tiler 322 may determine the tile to which the primitive data in each primitive chunk belongs, and write the primitive data into the polygon list corresponding to the tile in the system memory 323, and the manner of writing the primitive data is the same as that in FIG. 3A in the above-described embodiment, and regarding the detailed writing manner, reference may be made to in the above-described embodiment.

Different from FIG. 3A, the first primitive chunk L1 also carries one state change packet S0, and the tiler 322 needs to write the state change packet S0 into the polygon list corresponding to each tile corresponding to the tiler 322. For example, the polygon list 3231, the polygon list 3232, ..., and the polygon 323M in FIG. 3C each contains the state change packet S0. It may be seen that the order of the state change packet S0 in each polygon list is the same as the distribution order of the state change packet S0 in the primitive chunk data L1.

It should be understood that if there is a tile which does not have an overlapping relationship with all the primitive data in the first primitive chunk, the tiler still writes the state change packet S0 into the polygon list corresponding to the tile, and write the primitive chunk label L1 into the polygon list before writing the state change packet S0.

According to the above embodiment, since the state change packets are output to the polygon list of each tile corresponding to the tiler, the state change packet may be obtained by merging all polygon lists of the current tile in the process of rendering the current tile by the rasterization pipeline, and the state of the rasterization pipeline is updated. Further, since the primitive chunk label of the primitive chunk in which the state change packet is located is written before writing the state change packet, the rasterization pipeline may update the state of the pipeline at an accurate time point.

In some embodiments, the polygon list is ended with a terminator. When the rasterization pipeline extracts the to-be-distributed data from the polygon list. the terminator indicates whether the to-be-distributed data in the polygon list is completely extracted.

In some embodiments, when the polygon list of each of the tiles corresponding to all tilers is initialized by the system memory, the system memory may preset a terminator at the end of the polygon list. The rasterization pipeline may access the polygon list corresponding to the current tile in the system memory and extract all the to-be-distributed data corresponding to the current tile when processing a rendering task of the current tile, and the terminator indicates whether the to-be-distributed data in the polygon list is completely extracted. Exemplarily, the terminator may be represented in the form of "end".

Referring to FIG. 4A which is a schematic diagram of accessing a polygon list of the current tile by a rasterization pipeline, the current graphics processing pipeline includes N tilers, which are tiler 411 to tiler 41N respectively, and the tilers correspond to M polygon lists in the system memory, that is, the current graphics processing pipeline divides the screen into M blocks. The polygon list corresponding to the first tiler includes 4211 to 421M. The polygon list corresponding to the second tiler includes 4221 to 422M. By analogy, the polygon list corresponding to the Nth tiler includes 42N1 to 42NM.

It may be seen that the end of each polygon list is provided with the terminator "end", which is used to determine the end of the current polygon list. Taking the polygon list 4211 as an example, in the process of extracting primitive data from the polygon list 4211, the rasterization pipeline may sequentially extract three primitive data "P" after L1. At this time, since the primitive chunk label and primitive data are extracted, the terminator "end" in the polygon list has moved to the header of the polygon list 4211, that is, only one element "end" exists in the polygon list 4211, and the rasterization pipeline may determine that the to-be-distributed data in the polygon list 4211 has been completely extracted.

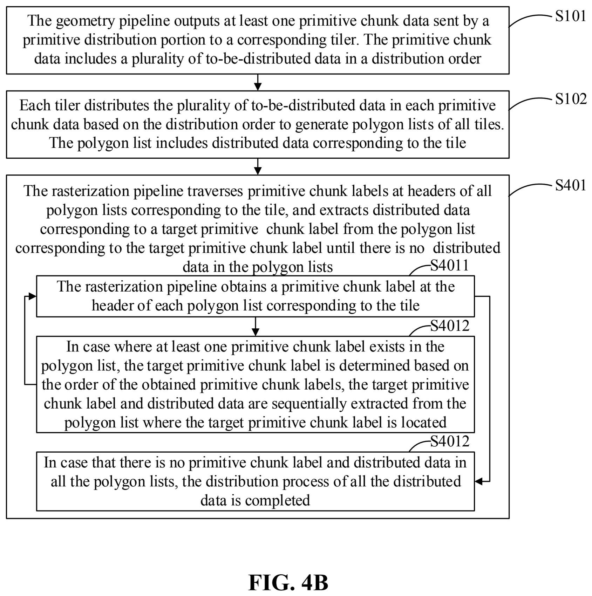

FIG. 4B is an optional schematic flowchart of a method for primitive distribution according to an embodiment of the present disclosure, and the method for primitive distribution may be performed by a processor of a computer device. Based on FIG. 1D, the step of obtaining distributed data corresponding to the tile from the polygon list corresponding to the tile through the rasterization pipeline in FIG. 1D is described in conjunction with the steps shown in FIG. 4B.

At S401, the rasterization pipeline traverses primitive chunk labels of headers of all the polygon lists corresponding to the tile, and extracts distributed data corresponding to a target primitive chunk label from a polygon list corresponding to the target primitive chunk label until the distributed data corresponding to the target primitive chunk label does not exist in each polygon list.

The target primitive chunk label is determined based on an order of chunk labels of the headers of the polygon lists.

In some embodiments, in the process of processing the rendering task of the tile, the rasterization pipeline obtains distributed data corresponding to the tile from all the polygon lists corresponding to the tile.

In this case, the rasterization pipeline may traverse the primitive chunk labels of the headers of all the polygon lists corresponding to the tile. Based on the order of the primitive chunk labels, the first primitive chunk label is determined as the target primitive chunk label, and the distributed data corresponding to the target primitive chunk label is extracted from the polygon list corresponding to the target primitive chunk label. In the process of extracting the distributed data corresponding to the target primitive chunk label from the polygon list, it is determined that all the distributed data corresponding to the target primitive chunk label has been extracted in response to the header of the polygon list being another primitive chunk label. Alternatively, in response to the header of the polygon list being a preset terminator (or the polygon list is empty), it is determined that all the distributed data corresponding to the target primitive chunk label has been extracted. The rasterization pipeline repeatedly executes the steps of determining the target primitive chunk label and extracting the distributed data corresponding to the target primitive chunk label based on the latest polygon lists, until the distributed data does not exist in all polygon lists corresponding to the tile.

In some embodiments, through steps S4011 to S4013, the rasterization pipeline traverses the primitive chunk labels of the headers of all the polygon lists corresponding to the tile, and extracts the distributed data corresponding to the target primitive chunk label from the polygon list corresponding to the target primitive chunk label until the distributed data does not exist in each polygon list.

At S4011, the rasterization pipeline obtains a respective primitive chunk label located in the header of each polygon list corresponding to the tile.

At S4012, in case where at least one primitive chunk label exists in each polygon list, the target primitive chunk label is determined based on the order of the obtained primitive chunk labels, the target primitive chunk label and distributed data corresponding to the target primitive chunk label are sequentially extracted from the polygon list where the target primitive chunk label is located, and the step of obtaining the primitive chunk label located in the header of each polygon list corresponding to the tile by the rasterization pipeline is proceeded.

At S4013, if there is no primitive chunk label and distributed data in each polygon list, the distribution process of all the distributed data is completed.

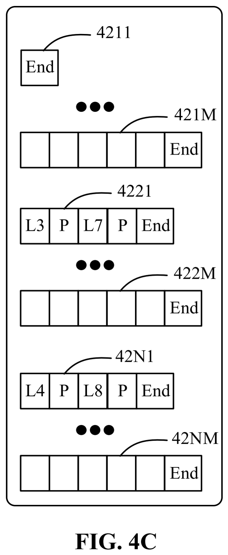

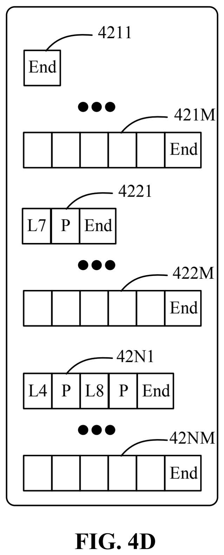

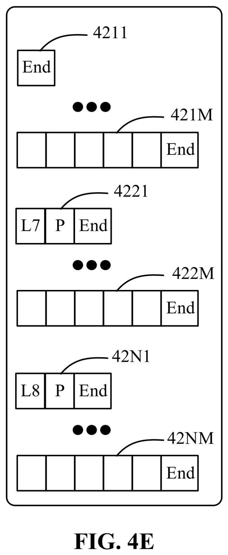

For example, referring to FIG. 4A, a case that the rasterization pipeline processes a rendering task of the first tile is taken as an example, the rasterization pipeline 145 needs to merge polygon lists corresponding to N tiles from the polygon list 4211 to the polygon list 42NM. In order to facilitate understanding this solution, the distributed data corresponding to the first tile does not exist in the polygon list corresponding to the third tiler to the polygon list corresponding to the (N-1)-th tiler. In the first traversal process of the rasterization pipeline, the rasterization pipeline determines whether distributed data corresponding to the tile is present in the polygon list 4211, the polygon list 4221 and the polygon list 42N1, and obtains three primitive chunk labels L1, L3, and L4. Based on the order of the primitive chunk labels, L1 is taken as the target primitive chunk label, and three primitive data "P" are successively extracted from the polygon list 4211. In this case, referring to the first schematic diagram of the polygon list shown in FIG. 4C, the end symbol "end" of the polygon list 4211 is at the header, which indicates that there is no distributed data corresponding to the tile in the polygon list 4211. In the process of the second traversal of the rasterization pipeline, the rasterization pipeline determines that the distributed data corresponding to the tile exists in the polygon list 4221 and the polygon list 42N1, and obtains two primitive chunk labels L3 and L4. Based on the order of the primitive chunk labels, L3 is taken as the target primitive chunk label, and one primitive data "P" is successively extracted from the polygon list 4211. Referring to the second schematic diagram of the polygon list shown in FIG. 4D, the primitive chunk label "L7" of the polygon list 4221 is at the header, which indicates that there is the distributed data corresponding to the tile in the polygon list 4211. In the third traversal process of the rasterization pipeline, the rasterization pipeline determines that the distributed data corresponding to the tile exists in the polygon list 4221 and the polygon list 42N1, and obtains two primitive chunk labels L7 and L4. Based on the order of the primitive chunk labels, L4 is taken as the target primitive chunk label, and one primitive data "P" is sequentially extracted from the polygon list 42N1. Referring to the third schematic diagram of the polygon list shown in FIG. 4E, the primitive chunk label "L8" of the polygon list 42N1 is at the header, which indicates that there is the distributed data corresponding to the tile in the polygon list 42N1, and so forth, until the header of each polygon list from polygon list 4211 to polygon list 42NM is the terminator "end", the rasterization pipeline ends the process of reading the distributed data of the tile.

In the embodiment of the present disclosure, the primitive chunk label of the primitive chunk corresponding to each distributed data is set before the distributed data in the polygon list. In this way, in the process of merging the polygon lists corresponding to the current tile by the rasterization pipeline, the order of the distributed data may be explicit, and the original input order may be effectively restored.

Based on the foregoing embodiments, an embodiment of the present disclosure provides an apparatus for primitive distribution, and each portion included in the apparatus for primitive distribution may be implemented by a processor in a computer device, or of course, may also be realized by the specific logic circuit. In the process of implementation, the processor may be a Central Processing Unit (CPU), a Microprocessor Unit (MPU), a Digital Signal Processor (DSP), a Field Programmable Gate Array (FPGA), or the like.

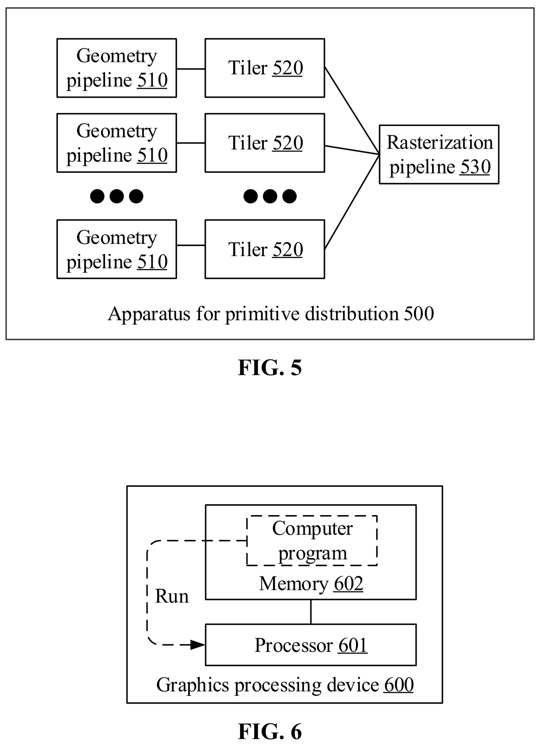

FIG. 5 is a schematic structural diagram of a composition of an apparatus for primitive distribution according to an embodiment of the present disclosure. The apparatus for primitive distribution is applied to a graphics processing unit, which performs primitive distribution on at least two tilers of a Tile-Based Rendering (TBR) architecture, and each tiler corresponds to one or more geometry pipelines. As shown in FIG. 5, the apparatus 500 for primitive distribution includes a geometry pipeline 510, a tiler 520, and a rasterization pipeline 530.

The geometry pipeline 510 is configured to output at least one primitive chunk data sent by a primitive distribution portion to each tiler. The primitive chunk data includes a plurality of to-be-distributed data in a distribution order.

The tiler 520 is configured to distribute the plurality of to-be-distributed data in each primitive chunk data based on the distribution order to generate polygon lists of all tiles. The polygon list includes distributed data corresponding to the tile.

The rasterization pipeline 530 is configured to obtain, for each tile, the distributed data corresponding to the tile from polygon lists corresponding to the tile to perform rasterization processing on the tile.

In some embodiments, the primitive chunk data further includes a primitive chunk label for representing an order of primitive chunk data.

In some embodiments, the apparatus 500 for primitive distribution further includes a primitive distribution portion.

The primitive distribution portion is configured to group a plurality of original primitive data in an original input order to obtain at least one primitive chunk and a primitive chunk label corresponding to each primitive chunk. The primitive chunk includes the plurality of to-be-distributed data in the distribution order, the primitive chunk label represents a position of the plurality of to-be-distributed data in the original input order.

The primitive distribution portion is configured to output the primitive chunk and the primitive chunk label corresponding to the primitive chunk to the geometry pipeline.

In some embodiments, the at least one primitive chunk satisfies at least one of the following preset grouping conditions: all the primitive chunks have the same number of to-be-distributed data; and the to-be-distributed data in all the primitive chunks corresponds to the same numbers of mesh shader workgroups.

In some embodiments, the primitive distribution portion is further configured to group the plurality of original primitive data based on a preset chunk size and the original input order, to obtain the at least one primitive chunk and the primitive chunk label corresponding to each primitive chunk.

In some embodiments, the primitive distribution portion is further configured to obtain a workgroup label of a mesh shader workgroup corresponding to each original primitive data; group the plurality of original primitive data based on a preset number of workgroups, workgroup labels of all the original primitive data and the original input order, to obtain the at least one primitive chunk and the primitive chunk label corresponding to each primitive chunk.

In some embodiments, the primitive distribution portion is further configured to output the primitive chunk and the primitive chunk label corresponding to the primitive chunk to the geometry pipeline based on a load balancing strategy.

In some embodiments, the primitive distribution portion is further configured to determine a label to be assigned corresponding to each geometry pipeline based on the primitive chunk label corresponding to the primitive chunk and the number of the geometry pipelines; output, for each geometry pipeline, the label to be assigned and a primitive chunk corresponding to the label to be assigned to the geometry pipeline.

In some embodiments, the primitive distribution portion is further configured to obtain load information of each geometry pipeline; and output the primitive chunk and the primitive chunk label corresponding to the primitive chunk to the geometry pipeline based on the load information of the geometry pipeline.

In some embodiments, for each tiler, in case where target primitive chunk data is included in at least one primitive chunk data of the tiler, a polygon list of a target tile corresponding to the tiler includes a primitive chunk label of the target primitive chunk data and all the target distribution data belonging to the target tile in the target primitive chunk data. The target primitive chunk data is primitive chunk data in which at least one target distribution data belongs to the target tile. An order of each target distribution data in the polygon list is the same as the distribution order. The primitive chunk label of the target primitive chunk data precedes the target distribution data.

In some embodiments, the tiler is further configured to sequentially perform a distribution process of each primitive chunk data based on the primitive chunk label corresponding to the primitive chunk data. For the distribution process of the target primitive chunk data, the tiler sequentially determines a tile corresponding to each of the primitive data in the target primitive chunk data based on the distribution order. Each of the primitive data in the target primitive chunk data is written into a polygon list of the tile corresponding to the primitive data.

In some embodiments, the tiler is further configured to, in response to determining that the primitive data belongs to the target tile and a primitive chunk label of a target primitive chunk data does not exist in a polygon list of the target tile, write the primitive chunk label of the target primitive chunk data into the polygon list of the target tile, and sequentially write at least one target distribution data belonging to the target tile after the primitive chunk label of the target primitive chunk data of the polygon list of the target tile.

In some embodiments, the tiler is further configured to, in case where there is primitive chunk data including a state change packet in at least one primitive chunk data of the tiler, for each tile, write the state change packet to a polygon list of each tile corresponding to the tiler. An order of the state change packet in the polygon list of each tile is the same as a distribution order of the state change packet in the primitive chunk data.

In some embodiments, each polygon list is ended with a terminator. The terminator indicates whether the to-be-distributed data in the polygon list is completely extracted when the rasterization pipeline extracts the to-be-distributed data from the polygon list.

In some embodiments, the rasterization pipeline is further configured to traverse primitive chunk labels located at the headers of all the polygon lists corresponding to the tile, and fetch distributed data corresponding to the target primitive chunk label from a polygon list corresponding to the target primitive chunk label until there is no distributed data in all the polygon lists. The target primitive chunk label is determined based on an order of the primitive chunk labels at the headers of the polygon lists.

In some embodiments, the rasterization pipeline is further configured to: obtain primitive chunk labels located at the headers of all the polygon lists corresponding to the tile; in case where there is at least one primitive chunk label in the polygon lists, determine the target primitive chunk label based on the order of the obtained primitive chunk labels, sequentially extract the target primitive chunk label and distributed data corresponding to the target primitive chunk label from the polygon list where the target primitive chunk label is located, and return to the step of obtaining, by the rasterization pipeline, primitive chunk labels located at the headers of all the polygon lists corresponding to the tile; and if there is no primitive chunk label and distributed data in each polygon list, complete the distribution process of all the distributed data .

The above description of the device embodiment is similar to the above description of the method embodiment, and has similar beneficial effects as the method embodiment. In some embodiments, the functions or modules included in the apparatus provided by the embodiments of the present disclosure may be used to perform the methods described in the above-described method embodiments. The technical details not disclosed in the device embodiments of the present disclosure can be understood with reference to the description in the method embodiments of the present disclosure.

It should be understood that in the embodiment of the present disclosure, if the above-described method for primitive distribution is implemented in the software function modules and sold or used as an independent product, the software function modules may be stored in a computer-readable storage medium. Based on this understanding, the technical solution of the present disclosure essentially or a part of the technical solution that contributes to the known methods may be embodied in the form of a software product, the software product is stored in a storage medium, and includes several instructions for causing a computer device (which may be a personal computer, a server, or a network device, etc.) to perform all or a part of the method described in various embodiments of the present disclosure. The storage medium includes a USB disk, a removable hard disk, a Read-Only Memory (ROM), a magnetic disk or an optical disk or various mediums that can store a program code. Thus, the embodiments of the present disclosure are not limited to any specific hardware, software or firmware or any combination of the hardware, software or firmware.

The embodiments of the present disclosure provide a computer device including a processor and a memory. The memory is configured for storing a computer program which is able to run on the processor. The program, when executed by the processor, implements some or all of the steps of the above-described method.

The embodiments of the present disclosure provide a computer-readable storage medium on which a computer program is stored. The computer program is executed by a processor to implement some or all of the steps of the above-described method. The computer-readable storage medium may be transitory or non-transitory.

An embodiment of the present disclosure provides a graphics processing unit configured for executing part or all of the steps in the above method.

An embodiment of the present disclosure provides a computer program including a computer-readable code, when the computer-readable code is run in a computer device, a processor in the computer device implements a part or all of the steps of the method described above.

The embodiments of the present disclosure provide a computer program product comprising a non-transitory computer-readable storage medium having a computer program stored thereon. The computer program, when read and executed by a computer, implements some or all of the steps of the above method. The computer program product may be implemented in particular by means of hardware, software or a combination thereof. In some embodiments, the computer program product is specifically embodied as a computer storage medium, and in other embodiments, the computer program product is specifically embodied as a software product, such as a software development kit (SDK) or the like.

It should be pointed out here that the above description for the various embodiments emphasizes a difference of the embodiments, and regarding the similarities or commonalities thereof, reference may be made to each other. The embodiments of the device, the storage medium, the computer program and the computer program product are described similarly to the description of the above method embodiments, and have similar beneficial effects as the method embodiments. Technical details not disclosed in the embodiments of the device, the storage medium, the computer program and the computer program product of the present disclosure are understood with reference to the description in the method embodiments of the present disclosure.

FIG. 6 is a schematic diagram of a hardware entity of a computer device according to an embodiment of the present disclosure. As shown in FIG. 6, the hardware entity of the computer device 600 includes a processor 601 and a memory 602. The memory 602 stores a computer program that may be run on the processor 601, and the processor 601 implements the steps in the method of any of the above embodiments when executing the program.

The memory 602 stores a computer program that may run on the processor, the memory 602 is configured to store instructions and applications executable by the processor 601, and may also store data (e.g., image data, audio data, voice communication data, and video communication data) to be processed or already processed by the processor 601 and various portions of the computer device 600, and the memory may be implemented by FLASH or Random Access Memory (RAM).

The processor 601 implements the steps of any method for primitive distribution described above when executing the program. The processor 601 generally controls an overall operation of the computer device 600.

An embodiment of the present disclosure provides a computer storage medium for storing one or more programs which, when executed by one or more processors, performs the steps of the method for primitive distribution in any of the above embodiments.

It should be pointed out here that the above description of the embodiments of the storage medium and the device is similar to the above description of the method embodiment, and has similar beneficial effects as the method embodiment. Technical details not disclosed in the embodiments of the storage medium and the device embodiment of the present disclosure are understood with reference to the description in the method embodiments of the present disclosure.

The processor may be at least one of an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a controller, a microcontroller, and a microprocessor. It may be understood that the electronic devices that implement the above functions of the processor may be other devices, which is not limited in the embodiments of the present disclosure.

The computer storage medium/memory may be a Read Only Memory (ROM), a Programmable ROM (PROM), an Erasable PROM (EPROM), an Electrically EPROM (EEPROM), a Ferromagnetic Random Access Memory (FRAM), a flash memory, a magnetic surface memory, an optical disc, a Compact Disc ROM (CD-ROM) or the like. The computer storage medium/memory may also be a variety of terminals including one or any combination of the above memories, such as a mobile phone, a computer, a tablet device, a personal digital assistant, and the like.

It is to be understood that "an embodiment" or "one embodiment" throughout the specification mean that a particular feature, structure, or characteristic related to the embodiment is included in at least one embodiment of the present disclosure. Accordingly, the expressions "in an embodiment" or "in one embodiment" that appear throughout the specification do not necessarily refer to the same embodiment. Furthermore, these particular features, structures, or characteristics may be incorporated into one or more embodiments in any suitable manner. It should be understood that in various embodiments of the present disclosure, the sequence numbers of the above-described operations/processes do not mean the order of execution, and the order of execution of each operation/process should be determined by its function and internal logic, and should not constitute any limitation on the implementation process of the embodiments of the present disclosure. The above-described sequence numbers of the embodiments of the present disclosure are for description only, and do not represent the advantages and disadvantages of the embodiments.

It should be understood that, herein, the terms "comprise", "include", or any other variation thereof herein are intended to encompass a non-exclusive inclusion such that a process, a method, an article, or a device including a series of elements includes not only those elements, but also other elements that are not explicitly listed, or includes elements inherent to such the process, the method, the article, or the device. Without further limitation, an element defined by the statement "comprising a..." does not preclude the presence of additional identical elements in the process, the method, the article, or the device that includes the elements.

In several embodiments provided by the present disclosure, it should be understood that the disclosed device and method may be implemented in other ways. The device embodiments described above are merely schematic. For example, the division of units is only a logical function division. In actual implementation, there may be other division methods. For example, multiple units or components may be combined, or may be integrated into another system, or some features may be ignored, or may not be implemented. Additionally, the coupling, or the direct coupling, or the communicative connection of the components shown or discussed may be indirect coupling or communication connection through some interfaces, devices or units, and may be electrical, mechanical, or otherwise.

The units described above as separate components may or may not be physically separated, and the components displayed as units may or may not be physical units. The components displayed as units may be located in one place or distributed to multiple network elements. Some or all of the units may be selected according to actual needs to achieve the purpose of the present embodiment solution.

In addition, in each embodiment of the present disclosure, the functional units may be all integrated into one processing unit, each unit may be separately used as one unit, or two or more units may be integrated into one unit. The above integrated unit may be implemented either in the form of hardware or in the form of a combination of hardware and software functional units. Those skilled in the art will understand that all or part of the operations for implementing the above-described method embodiments may be completed by hardware related to program instructions, and the aforementioned program may be stored in a computer-readable storage medium, and when the program is executed, the program implements the operations including the above-described method embodiments. The aforementioned storage medium includes various media capable of storing program codes, such as a removable storage device, a read only memory (ROM), a magnetic disk, an optical disk, or the like.

Alternatively, if the integrated unit in the present disclosure is implemented in the form of a software function portion and sold or used as an independent product, the integrated unit may be stored in a computer-readable storage medium. Based on this understanding, the technical solution of the present disclosure essentially or a part of the technical solution that contributes to the known methods may be embodied in the form of a software product, the computer software product is stored in a storage medium, including several instructions for causing a computer device (which may be a personal computer, a server, or a network device, etc.) to perform all or a part of the method described in various embodiments of the present disclosure. The aforementioned storage medium includes various media capable of storing program codes, such as a removable storage device, a ROM, a magnetic disk, an optical disk, or the like.

The foregoing is merely an embodiment of the present disclosure, but the scope of protection of the present disclosure is not limited thereto, and changes or substitutions easily conceived by any person skilled in the art within the technical scope disclosed in the present disclosure should be covered within the scope of protection of the present disclosure.

### INDUSTRIAL PRACTICALITY

The embodiments of the present disclosure provide a method and an apparatus for primitive distribution, a computer device, a storage medium, a graphics processing unit, and a computer program product. The method for primitive distribution is applied to a graphics processing unit, and the graphics processing unit performs primitive distribution in at least two tilers of a Tile-Based Rendering (TBR) architecture, each tiler corresponding to one or more geometry pipelines. The method includes operations as follows. The geometry pipeline outputs at least one primitive chunk data sent by a primitive distribution portion to a corresponding tiler, the primitive chunk data includes a plurality of to-be-distributed data in a distribution order. Each tiler distributes the plurality of to-be-distributed data in each primitive chunk data based on the distribution order to generate polygon lists of all tiles, and the polygon list includes distributed data corresponding to the tile. A rasterization pipeline obtains, for each tile, the distributed data corresponding to the tile from all the polygon lists corresponding to the tile to perform rasterization processing on the tile. In the present embodiment, at least two geometry pipelines and at least two corresponding tilers perform parallel processing on a plurality of original primitive data in the original input order, thereby improving the early-stage processing efficiency of the graphics processing unit. Also, since each tiler corresponds to one or more geometry pipelines, the tiler can independently process the primitive chunk data in the corresponding geometry pipelines. Compared with establishing the connection relationship between all geometry pipelines and each tiler, there is no need in the present disclosure to add a complete interconnection network for each tiler, thereby reducing the complexity of physical design while decreasing the area and power cost. Further, a plurality of polygon lists are set for the tiler in the present disclosure, for storing the obtained distributed data corresponding to all the tiles, and the distributed data corresponding to the tile is obtained from the polygon lists corresponding to the tile through a rasterization pipeline. In this way, the plurality of polygon lists obtained by parallel processing of the plurality of tilers may be merged, and the original input order of all distributed data corresponding to the tile may be restored.

## Claims

1. A method for primitive distribution applied to a graphics processing unit, wherein the graphics processing unit performs primitive distribution based on at least two tilers of a Tile-Based Rendering (TBR) architecture, each of the tilers corresponding to one or more geometry pipelines, and the method comprising:
outputting, by each of the geometry pipelines, at least one primitive chunk data sent by a primitive distribution portion to a tiler corresponding to the geometry pipeline, wherein the primitive chunk data comprises a plurality of to-be-distributed data in a distribution order;
distributing, by each of the tilers, the plurality of to-be-distributed data in each of the primitive chunk data based on the distribution order to generate polygon lists of all of the tiles, wherein the polygon list comprises distributed data corresponding to the tile; and
obtaining, by a rasterization pipeline for each tile, the distributed data corresponding to the tile from each polygon list corresponding to the tile to perform rasterization processing on the tile.

2. The method of claim 1, wherein the primitive chunk data further comprises a primitive chunk label for representing an order of the primitive chunk data.

3. The method of claim 2, further comprising:
grouping, by the primitive distribution portion, a plurality of original primitive data in an original input order to obtain at least one primitive chunk and a primitive chunk label corresponding to each primitive chunk, wherein the primitive chunk comprises the plurality of to-be-distributed data in the distribution order, and the primitive chunk label is used to represent a position of the plurality of to-be-distributed data in the original input order; and
outputting, by the primitive distribution portion, the primitive chunk and the primitive chunk label corresponding to the primitive chunk to the geometry pipeline.

4. The method of claim 3, wherein the grouping by the primitive distribution portion a plurality of original primitive data in an original input order to obtain at least one primitive chunk and a primitive chunk label corresponding to each primitive chunk comprises:
grouping, by the primitive distribution portion, a plurality of original primitive data based on a preset chunk size and an original input order to obtain at least one primitive chunk and a primitive chunk label corresponding to each of the primitive chunk.

5. The method of claim 3, wherein the grouping by the primitive distribution portion a plurality of original primitive data in an original input order to obtain at least one primitive chunk and a primitive chunk label corresponding to each primitive chunk comprises:
obtaining a workgroup label of a mesh shader workgroup corresponding to each original primitive data; and
grouping, by the primitive distribution portion, a plurality of original primitive data based on a preset number of workgroups, a workgroup label of each original primitive data and an original input order, to obtain at least one primitive chunk and a primitive chunk label corresponding to each of the primitive chunk.

6. The method of claim 3, wherein the outputting by the primitive distribution portion the primitive chunk and the primitive chunk label corresponding to the primitive chunk to the geometry pipeline comprises:
outputting, by the primitive distribution portion based on a load balancing strategy, the primitive chunk and the primitive chunk label corresponding to the primitive chunk to the geometry pipeline.

7. The method of claim 3, wherein the outputting by the primitive distribution portion the primitive chunk and the primitive chunk label corresponding to the primitive chunk to the geometry pipeline comprises:
determining a label to be assigned corresponding to each of the geometry pipelines based on the primitive chunk label corresponding to the primitive chunk and a number of the geometry pipelines; and
for each of the geometry pipelines, outputting, by the primitive distribution portion, the label to be assigned and a primitive chunk corresponding to the label to be assigned to the geometry pipeline.

8. The method of claim 3, wherein the outputting by the primitive distribution portion the primitive chunk and the primitive chunk label corresponding to the primitive chunk to the geometry pipeline comprises:
obtaining load information of each of the geometry pipelines; and
for each of the geometry pipelines, outputting, by the primitive distribution portion, the primitive chunk and the primitive chunk label corresponding to the primitive chunk to the geometry pipeline based on the load information of the geometry pipeline.

9. The method of claim 2, wherein, for each of the tilers, in case where at least one primitive chunk data of the tiler comprises target primitive chunk data, a polygon list of a target tile corresponding to the tiler comprises a primitive chunk label of the target primitive chunk data and all target distribution data belonging to the target tile in the target primitive chunk data, and
wherein the target primitive chunk data is primitive chunk data in which at least one target distribution data belongs to the target tile, an order of each of the target distribution data in the polygon list is the same as the distribution order, and the primitive chunk label of the target primitive chunk data precedes all the target distribution data.

10. The method of claim 9, wherein the plurality of to-be-distributed data comprises at least one primitive data, the distributing by each of the tilers the plurality of to-be-distributed data in each of the primitive chunk data based on the distribution order to generate polygon lists of all of the tiles comprises:
sequentially performing, by the tiler, a distribution process of all the primitive chunk data based on the primitive chunk label corresponding to the primitive chunk data; and
wherein the distribution process of the target primitive chunk data comprises: sequentially determining, by the tiler based on the distribution order, the tile corresponding to all the primitive data in the target primitive chunk data, and writing each of the primitive data in the target primitive chunk data into the polygon list of the tile corresponding to the primitive data.

11. The method of claim 10, wherein the writing each of the primitive data in the target primitive chunk data into the polygon list of the tile corresponding to the primitive data comprises:
in response to determining that the primitive data belongs to the target tile and there is no primitive chunk label of the target primitive chunk data in the polygon list of the target tile, writing a primitive chunk label of the target primitive chunk data into the polygon list of the target tile; and
sequentially writing the at least one target distribution data belonging to the target tile after the primitive chunk label of the target primitive chunk data of the polygon list of the target tile.

12. The method of any one of claims 9 to 11, further comprising:
in case where, for each of the tilers, at least one primitive chunk data of the tiler includes primitive chunk data comprising a state change packet, writing the state change packet to the polygon lists of all the tiles corresponding to the tiler;
wherein an order of the state change packet in the polygon list of each tile is the same as a distribution order of the state change packet in the primitive chunk data.

13. The method of any one of claims 9 to 11, wherein each of the polygon lists is ended with a terminator, and the terminator indicates whether the to-be-distributed data in the polygon list is completely extracted when the rasterization pipeline extracts the to-be-distributed data from the polygon list.

14. The method of any one of claims 9 to 11, wherein the obtaining by the rasterization pipeline for each tile the distributed data corresponding to the tile from each polygon list corresponding to the tile comprises:
traversing, by the rasterization pipeline, primitive chunk labels at respective headers of all the polygon lists corresponding to the tile, and extracting distributed data corresponding to a target primitive chunk label from the polygon list corresponding to the target primitive chunk label until there is no distributed data in the polygon lists;
wherein the target primitive chunk label is determined based on an order of the primitive chunk labels at the headers of the polygon lists.

15. The method of claim 14, wherein the traversing by the rasterization pipeline primitive chunk labels at respective headers of all the polygon lists corresponding to the tile and extracting distributed data corresponding to a target primitive chunk label from the polygon list corresponding to the target primitive chunk label until there is no distributed data in the polygon lists comprises:
obtaining, by the rasterization pipeline, primitive chunk labels located at respective headers of all the polygon lists corresponding to the tile;
in case where there is at least one primitive chunk label in each of the polygon lists, determining the target primitive chunk label based on the order of the obtained primitive chunk labels, sequentially extracting the target primitive chunk label and distributed data corresponding to the target primitive chunk label from the polygon list where the target primitive chunk label is located, and returning to obtaining, by the rasterization pipeline, primitive chunk labels located at respective headers of all the polygon lists corresponding to the tile; and
representing that the distribution process of all the distributed data is completed in case that there is no primitive chunk label and distributed data in each of the polygon lists.

16. An apparatus for primitive distribution applied to a graphics processing unit, wherein the graphics processing unit performs primitive distribution based on at least two tilers of a Tile-Based Rendering (TBR) architecture, each of the tilers corresponding to one or more geometry pipelines, and the apparatus comprising
a geometry pipeline configured to output at least one primitive chunk data sent by a primitive distribution portion to a tiler corresponding to the geometry pipeline, wherein the primitive chunk data comprises a plurality of to-be-distributed data in a distribution order;
the tiler configured to distribute the plurality of to-be-distributed data in each of the primitive chunk data based on the distribution order to generate polygon lists of all of the tiles, wherein the polygon list comprises distributed data corresponding to the tile; and
a rasterization pipeline configured to obtain, for each tile, the distributed data corresponding to the tile from each polygon list corresponding to the tile to perform rasterization processing on the tile.

17. A computer device comprising a processor and a memory having a computer program executable on the processor stored thereon, wherein the program, when executed by the processor, implements the steps of the method of any one of claims 1 to 15.

18. A computer-readable storage medium having a computer program stored thereon, wherein the computer program, when executed by a processor, implements the steps of the method of any one of claims 1 to 15.

19. A graphics processing unit configured to perform the method of any one of claims 1 to 15.

20. A computer program product comprising a computer program or instruction that, when executed by a processor, implements the operations of the method of any one of claims 1 to 15.
